# EUROPÄISCHE PATENTSCHRIFT

(11) **EP 1 626 225 B1**
(45) Veröffentlichungstag und Bekanntmachung des Hinweises auf die Patenterteilung: **15.02.2012**
(21) Anmeldenummer: 05017604.9
(22) Anmeldetag: 12.08.2005
(51) Int. Cl.: F16N 13/16

(54) **Einrichtung zur Zuführung von Schmierstoff**
System for feeding lubricant
Dispositif de distribution de lubrifiant

(30) Priorität: 12.08.2004 EP 04019147
(43) Veröffentlichungstag der Anmeldung: 15.02.2006
(73) Patentinhaber: Baier & Köppel GmbH & Co., 91257 Pegnitz (DE)
(72) Erfinder: Brendel, Jürgen, 91278 Pottenstein (DE)
(74) Vertreter: Zech, Stefan Markus

(56) Entgegenhaltungen:
- DE-A1- 4 137 177
- GB-A- 840 217
- US-A- 5 029 672
- US-A- 5 285 871

## Beschreibung

Die Erfindung betrifft eine Einrichtung zur Zuführung von Schmierstoff an ein in einem Fahrzeug, einer Bau-, Land- oder Industriemaschine eingebautes Schmierstoffzuführungssystem, das eine oder eine Mehrzahl von Schmierstellen ggf. unter Zwischenschaltung eines oder mehrerer Progressivverteiler mit Schmierstoff versorgt, umfassend ein Dosierbehältnis, in dem ein Schmierstoffaufnahmeraum ausgebildet ist, wobei der Schmierstoffaufnahmeraum durch Innenwandungen des Dosierbehältnisses und eine Vorderseite eines verschieblich gelagerten Kolbens begrenzt ist, wobei der Schmierstoffaufnahmeraum weiterhin einer einen Schmierstoffeinlass zur Aufnahme einer vorbestimmten Menge an Schmierstoff und einen Schmierstoffauslass zur Abgabe von Schmierstoff an das Schmierstoffverteilersystem aufweist. Weiterhin betrifft die Erfindung ein Verfahren zur Zuführung von Schmierstoff an ein in ein Fahrzeug, eine Bau-, Land- oder Industriemaschine eingebautes Schmierstoffzuführungssystem.

Es sind verschiedene Einrichtungen und Verfahren zur Dosierung von Schmierstoff in einem Schmierstoffzuführungssystem umfassend ein Dosierbehältnis bekannt. In vielen Systemen werden speziell ausgestaltete Dosierpumpen eingesetzt, welche in einer gewünschten Dosierung Schmierstoff in ein Schmierstoffzuführungssystem pressen.

In weniger aufwändigen Systemen wird eine vordosierte Menge an Schmierstoff manuell in das Schmierstoffzuführungssystem eingepresst. Das manuelle Einpressen von Schmierstoff in ein Schmierstoffzuführungssystem ist gerade, wenn ein oder mehrere Progressivverteiler zwischengeschaltet sind, äußerst kraftaufwändig.

Aus der US 5,029,672 ist bspw. ein System zum Schmieren einer Vielzahl von Schmierstellen in einer Druck-, Vervielfältigungs- oder ähnlichen Maschine bekannt. Darin beschrieben sind weiter ein Hauptreservoir zur Bereitstellung des Schmierstoffes, einem über den Schmierstellen gelegenem Verteiler mit einer Vielzahl von Messreservoirs mit je einer Überlauföffnung zur Regulierung der beförderten Schmierstoffmenge und einer Zuleitung zu einer Schmierstelle. Zur Zuführung von Schmiermittel aus dem Hauptreservoir zu den Messreservoirs ist eine periodisch zu betätigende Pumpe vorgesehen.

Weiterhin ist aus der DE 41 37 177 A1 ein System zum Schmieren einer Kettensäge eines fortwirtschaftlichen Betriebes mit einem an den Schmiermittelbedarf der Kettensäge angepassten Schmiermittelfluß bekannt, wobei ein primärer Fluß des Hydrauliköls der forstwirtschaftlichen Maschine abhängig vom Schmiermittelbedarf der Kettensäge geregelt wird und das Schmiermittel von einer Pumpe gefördert wird, deren Betrieb durch den Fluß des Hydrauliköls gesteuert wird, der wesentlichen größer ist als der erforderliche Schmierölfluß.

Die Aufgabe der vorliegenden Erfindung besteht darin, eine Einrichtung zu schaffen bzw. ein Verfahren anzugeben, die bzw. das es gestattet, eine vorbestimmte Menge an Schmierstoff auf einfache Weise in ein Schmierstoffzuführungssystem zu pressen.

Diese Aufgabe wird in vorrichtungstechnischer Hinsicht mit einer Einrichtung nach den Merkmalen der Ansprüche 1 und 2 und in verfahrenstechnischer Hinsicht mit den Merkmalen der Ansprüche 19 und 20 gelöst. Vorteilhafte Weiterbildungen sind in den Unteransprüchen angegeben.

Ein Kerngedanke der vorliegenden Erfindung besteht dabei darin, dass Schmierstoff in das in einem Fahrzeug, einer Bau-, Land- oder Industriemaschine eingebauten Schmierstoffzuführungssystem nicht mehr manuell eingepresst wird, sondern unter Zuhilfenahme von Druckfluid, das ohnehin für Arbeitseinrichtungen an der Bau-, Land- oder Industriemaschine zur Verfügung steht. Bei einem Bagger beispielsweise ist ohnehin ein Hydrauliksystem vorgesehen zum Antrieb beispielsweise der Schaufel, des Baggerarms, etc.. Der im Hydrauliksystem des Baggers bereitstellbare Druck kann nun auch dazu ausgenutzt werden, Schmierstoff in das Schmierstoffzuführungssystem einzupressen.

Bei der erfindungsgemäßen Einrichtung ist hierzu innerhalb des Dosierbehältnisses ein Druckbeaufschlagungsraum an der dem Schmierstoffaufnahmeraum abgewandten Seite des Kolbens vorgesehen, wobei der Druckbeaufschlagungsraum über einen Druckfluidanschluss mit dem vom Fahrzeug, von der Bau-, Land- oder Industriemaschine bereitgestellten Druckfluid beaufschlagbar ist, wobei Druckfluid sowohl aus einer hydraulischen als auch aus einer pneumatischen Anlage gemäß der Idee der vorliegenden Erfindung zum Einsatz gelangen kann.

Aufgrund der bei einer hydraulischen Anlage in der Regel bereits ohnehin bereitstehenden hohen Drucke, kann nach einem bevorzugten Aspekt der vorliegenden Erfindung das hydraulische Druckfluid ohne Übersetzung direkt in den Druckbeaufschlagungsraum geführt und dort auf den Kolben einwirken. Pneumatische Anlagen werden dagegen in der Regel eher mit niedrigeren Drücken betrieben, so dass bei Anschluss an ein pneumatisches Druckfluid u.U. eine Übersetzung zur Erhöhung des Druckes des Druck-fluids vorgesehen werden müsste.

Der Druckfluidanschluss umfasst eine in den Druckbeaufschlagungsraum mündende Druckfluideinströmöffnung sowie eine hiervon räumlich getrennte, vom Druckbeaufschlagungsraum abgehende Druckfluidausströmöffnung. Nach diesem Gedanken ist der Druckbeaufschlagungsraum über mindestens zwei Öffnungen mit der Druckfluidseite verbunden.

Gemäß einem ersten Aspekt der Erfindung ist ein Umsteuerkolben vorgesehen, der wahlweise ein Abströmen durch die Druckfluidausströmöffnung sperrt und dabei gleichzeitig das Zuströmen von Druckfluid über die Druckfluideinströmöffnung zulässt bzw. ein Zuströmen über die Druckfluideinströmöffnung sperrt und gleichzeitig ein Ausströmen von Druckfluid über die Druckfluidausströmöffnung zulässt.

Gemäß einem zweiten unabhängigen Aspekt der Erfindung ist ein weiterer Umsteuerkolben vorgesehen, der zwischen Schmierstoffeinlass und Schmierstoffauslass wirksam ist, um schmierstoffseitig alternativ einen Schmierstofffluss im Schmierstoffeinlass bzw. im Schmierstoffauslass zu sperren.

In einer einfacheren, alternativen Ausgestaltung umfasst der Druckfluid-anschluss nur eine einzige Druckfluideinström-/ausströmöffnung, so dass Druckfluid stets über diese einzige Druckfluideinströmöffnung-/ausströmöffnung in den Druckbeaufschlagungsraum je nach Betriebszustand einströmt bzw. ausströmt.

In einer möglichen, vorteilhaften Ausführungsform umfasst der Druckfluidanschluss eine vorzugsweise einstellbare Dosiereinrichtung, insbesondere in Form eines vorzugsweise einstellbaren Dosierventils, um die Menge des in den Druckbeaufschlagungsraum geleiteten Druckfluids auf einen vorbestimmten Wert zu begrenzen.

Während, wie eingangs geschildert, Dosierventile innerhalb von Schmierstoffzuführungen bereits bekannt sind, zeichnet sich die vorliegende Lösung dadurch aus, dass hier die Dosiereinrichtung bzw. das Dosierventil nicht direkt Schmierstoff dosiert, sondern indirekt wirkt, indem es das zugeführte Druckfluid dosiert. Diese Lösung ist wesentlich wartungsfreundlicher, da gerade bei Verwendung unreinen bzw. unterschiedlichen Schmierstoffs eine einwandfreie Funktion des Dosierventils auf der Schmierstoffseite über längere Nutzungsperioden nicht immer mit ausreichender Sicherheit gewährleistet werden kann. Auf der Druckfluidseite hingegen ist die Gefahr von Verunreinigungen eher gering; ein Zusetzen oder andere Beeinträchtigungen der Dosiereinrichtung erscheinen auch über längere Nutzungsphasen eher unwahrscheinlich.

In einem Fördermodus wird über die fortschreitende Befüllung des Druckbeaufschlagungsraums der Kolben in einer solchen Weise bewegt, dass sich der Schmierstoffaufnahmeraum verkleinert und Schmierstoff abgegeben wird. Ein Ausströmen von Druckfluid aus dem Druckbeaufschlagungsraum ist in diesem Modus nicht erwünscht. Erst wenn der Druckbeaufschlagungsraum maximal befüllt ist, kann auf diese Weise kein weiterer Schmierstoff mehr gefördert werden.

Zur Befüllung des Schmierstoffaufnahmeraums muss das Druckfluid nun wieder aus dem Druckbeaufschlagungsraum entleert werden. Hierzu sind verschiedene Lösungen denkbar. In einer ersten Ausgestaltung kann das Druckfluid, insbesondere wenn es sich beispielsweise um Pressluft handelt, einfach an die Umgebung abgegeben werden. In vielen Fällen, beispielsweise wenn es sich bei dem Druckfluid um Hydrauliköl handelt, ist eine Rückführung in die hydraulische Anlage geboten. Dies kann im entlasteten Zustand durch Öffnen einer entsprechenden Rückführungsleitung erfolgen. Die Öffnung in dieser Rückführungsleitung kann bei Abfallen des Förderdrucks des Druckfluids durch Öffnen eines Rückschlagventils erfolgen. Alternativ ist auch das Öffnen der Rückführungsleitung über ein beispielsweise elektrisch oder mechanisch betätigtes Ventil denkbar.

In einer besonders zweckmäßigen Ausgestaltung wirkt der druckfluidseitige Umsteuerkolben mit Wirkübertragungsmitteln zusammen, die bei Beaufschlagung des Schmierstoffeinlasses mit Schmierstoff (bei Schmierstoffbefüllung) den druckfluidseitigen Umsteuerkolben in eine Befüllposition verschieben bzw. in einer Befüllposition halten.

Durch diese Maßnahme wird eine automatische Absperrung des Druckfluideinlasses und gleichzeitig die Freigabe des Druckfluidauslasses sichergestellt, sobald eine Befüllung mit Schmierstoff vorgenommen wird.

In einer konkreten Ausgestaltung sind die Wirkübertragungsmittel durch einen vom Schmierstoffeinlass abzweigenden Druckübertragungskanal bebildet.

Um ein Befüllen des Schmierstoffaufnahmeraums mit Schmierstoff über einen bestimmten Fülldruck hinaus zu vermeiden kann dem Schmierstoffeinlass bzw. in einem abzweigenden Überlaufkanal ein Druckbegrenzungsventil angeordnet sein, das bei Erreichen eines vorbestimmten Grenzdrucks P_{G} öffnet und Schmierstoff ablässt.

Nach einem bevorzugten Aspekt der vorliegenden Erfindung ist am Dosierbehältnis eine Zumesseinrichtung vorgesehen, die eine Einstellung bzw. Kontrolle des Verschiebewegs des Kolbens ermöglicht, derart, dass pro Kolbenhub eine einstellbare Menge an Schmierstoff dem Schmierstoffzuführungssystem zugeführt wird. Hierdurch kann auf den jeweiligen Schmierstoffbedarf in geeigneter Weise reagiert werden, nämlich einerseits dadurch, dass die zugeführte Menge an Schmierstoff pro Kolbenhub exakt einstellbar ist und auf der anderen Seite dadurch, dass auch gesteuert bzw. kontrolliert werden kann, wie oft bzw. in welchen Zeitintervallen ein Kolbenhub zum Zwecke der Zuführung von Schmierstoff bewirkt wird.

In einer konkreten Ausgestaltung kann die Zumesseinrichtung eine mit dem Kolben verbundene Stange umfassen, die durch eine Wandung des Dosierbehältnisses geführt ist und über das Dosierbehältnis vorsteht. Der Überstand der Stange über das Dosierbehältnis hinaus dient damit als Maß für das aktuelle Volumen des Schmierstoffaufnahmeraums und damit als Maß für das Volumen des im Schmierstoffaufnahmeraumes aufgenommenen Schmierstoffs. Besonders bevorzugt ist an der Stange selbst oder in einem Gehäuse, in dem die über dem Dosierbehältnis überstehende Stange aufgenommen ist, eine Skala vorgesehen, um den aktuellen Wert des Volumens des Schmierstoffaufnahmeraumes bzw. des aufgenommenen Schmierstoffs ablesen zu können.

Generell kann, um die Menge an pro Kolbenhub zugeführtem Schmierstoff zu begrenzen, der Kolbenhub beim Befüllen des Dosierbehältnisses begrenzt werden, und zwar dadurch, dass der Befüllvorgang optisch, beispielsweise unter Zuhilfenahme einer Skala, kontrolliert wird oder dass andere Begrenzungsmittel zum Einsatz gelangen, um den Kolbenhub beim Befüllvorgang auf einen jeweils gewünschten Wert zu begrenzen.

Alternativ ist es bei anderen Ausgestaltungen auch denkbar, beim Befüllvorgang ein maximales Volumen des Schmierstoffaufnahmeraumes zu befüllen und anschließend den Kolbenhub beim Einpressen des Schmierstoffs in das Schmierstoffzuführungssystem durch geeignete Mittel, beispielsweise durch einen einstellbaren Anschlag, etc., zu begrenzen.

Die Lagerung der Stange in einer Führung in der stirnseitigen Wandung des Dosierbehältnisses ist auch unabhängig davon, ob die Stange Bestandteil einer Zumesseinrichtung bildet, sinnvoll, da hierdurch ein einfacher und unkomplizierter Aufbau für die erfindungsgemäße Vorrichtung geschaffen wird.

Nach einem weiteren Aspekt der vorliegenden Erfindung sind im Bereich der Führung zur Abdichtung gegen den Druck des Druckfluid Abdichtmittel vorgesehen.

In einer speziellen Ausgestaltung kann das dem Kolben abgewandte Ende der Stange in einem transparenten Gehäuse geführt sein, das an der stirnseitigen Wandung des Dosierbehältnisses befestigt ist. Hierdurch ist zunächst sichergestellt, dass das sich bewegende, dem Kolben abgewandte Ende sich frei, eingekapselt in einem Gehäuse, bewegen kann. Die Stange erhält somit durch das transparente Gehäuse, das auch als Erweitung des Gehäuses des Dosierbehältnisses angesehen werden kann, einen freien Bewegungsraum. Zusätzlich kann der Hub des Kolbens in beide Richtungen kontrolliert und damit die in den Schmierstoffaufnahmeraum aufgenommene Menge von Schmierstoff bzw. bereits an das Schmierstoffzuführungssystem abgegebene Menge an Schmierstoff abgeschätzt werden. Eine besonders gute Kontrolle lässt sich erzielen, wenn am transparenten Behältnis und/oder an der Stange selbst Markierungen nach Art einer Skala vorgegeben sind, die zweckmäßigerweise direkt auf das Füllvolumen des Schmierstoffaufnahmeraumes z.B. in cm³ geeicht ist.

Wenn nicht die Befüllung des Dosierbehältnisses auf ein bestimmtes Zwischenvolumen kontrolliert bzw. eingestellt wird, sondern das Dosierbehältnis maximal mit Schmierstoff befüllt wird, besteht die Möglichkeit, den entgegengesetzten Kolbenhub beim Einpressen des Schmierstoffs in das Schmierstoffzuführungssystem zu kontrollieren bzw. einzustellen. Dies kann ebenfalls lediglich durch eine optische Kontrolle erfolgen; besonders zweckmäßig ist es jedoch, an der sich bewegenden Stange an ihrem über dem Dosierbehältnis vorstehenden Ende Begrenzungsmittel vorzusehen, die nach einem entsprechenden Kolbenhub beim Einpressen des Schmierstoffs in das Schmierstoffzuführungssystem an einen Anschlag stoßen und so die Schmierstoffabgabe begrenzen.

In einer einfachen, jedoch keineswegs zwingenden Ausführungsform könnte auf der Stange ein Gewinde sein, auf dem eine Mutter ggf. zusammen mit einer Arretierungsmutter auf einer gewünschten Längenposition festlegbar ist. Der Anschlag könnte durch die Außenfläche der stirnseitigen Wandung des Dosierbehältnisses gebildet sein, so dass die Begrenzungsmutter nach einem bestimmten Kolbenhub an der stirnseitigen Wandung des Dosierbehältnisses in Anlage kommt und so die Schmierstoffabgabe begrenzt.

Um den von der Bau-, Land- oder Industriemaschine bereitstellbaren Fluidstrom auf ein geeignetes Maß zu begrenzen, umfasst der Druckfluidanschluss in einer vorzugsweisen Weiterbildung der vorliegenden Erfindung eine Drosseleinrichtung. Diese Drosseleinrichtung kann entweder fest eine vorbestimmte Drosselung bewirken; besonders bevorzugt ist allerdings, wenn die Drosseleinrichtung einstellbar ausgebildet ist, so dass der Drosselungseffekt verstärkt bzw. reduziert werden kann.

Nach einem weiteren Aspekt der vorliegenden Erfindung ist ein zur Drosseleinrichtung parallel geschaltetes Rückschlagventil vorgesehen, das unter Umgehung der Drosseleinrichtung eine Rückführung des Druckfluids und damit eine Reduzierung des Druckbeaufschlagungsraumes gestattet, wenn der vom Fahrzeug der Bau-, Land- oder Industriemaschine am Druckfluidanschluss entgegengesetzte Druck unter einem bestimmten Rückführungsdruck Pᵣ abgefallen ist. Hierdurch kann der Schmierstoffaufnahmeraum bei Bedarf erneut mit Schmierstoff befüllt werden.

Nach einem weiteren Aspekt der vorliegenden Erfindung wird auch ein Verfahren zur Zuführung von Schmierstoff an ein in ein Fahrzeug eine Bau-, Land- oder Industriemaschine eingebautes Schmierstoffzuführungssystem, das eine oder eine Mehrzahl von Schmierstellen ggf. unter Zwischenschaltung eines oder mehrerer Progressivverteiler mit Schmierstoff versorgt, beansprucht, wobei das Verfahren die folgenden Schritte umfasst: Befüllen eines Schmierstoffaufnahmeraumes eines Dosierbehältnisses mit einer vorbestimmten Menge an Schmierstoff, Einpressen der im Dosierbehältnis aufgenommenen Menge an Schmierstoff in das Schmierstoffzuführungssystem , wobei das Einpressen unter Einwirkung von Druckfluid aus einem an sich zum Antrieb von Arbeitseinrichtungen dienenden Druckfluidsystem einer Arbeitseinrichtung eines Fahrzeuges, einer Bau-, Land- oder Industriemaschine erfolgt. Dieses Verfahren gestattet das Einpressen von Schmierstoff ohne Zuhilfenahme aufwändiger Schmiermittelpumpen.

Nach einer ersten Alternative des erfindungsgemäßen Verfahrens wird beim Befüllen des Schmierstoffaufnahmeraums ein Schmierstofffluss aus dem Schmierstoffaufnahmeraum hinaus, insbesondere durch den Schmierstoffauslass, mittels eines Absperrventils oder eines durch das Befüllen betätigbaren schmierstoffseitigen Umsteuerkolben abgesperrt. Gerade bei der Verwendung eines Umsteuerkolbens wird eine einfache und zuverlässige Absperrung des Schmierstoffauslasses beim Befüllvorgang erreicht. Dies verhindert, dass bereits mit dem Fülldruck beim Einpressen von Schmierstoff in den Schmierstoffaufnahmeraum größere Mengen von Schmierstoff aus dem Schmierstoffauslass gelangen und eine unkontrollierte Überversorgung der Schmierstellen mit Schmierstoff erfolgt.

In einer bevorzugten Weiterbildung des vorliegenden Verfahrens kann beim Befüllen des Schmierstoffaufnahmeraumes das aktuelle Volumen, d.h. die bereits aufgenommene Menge an Schmierstoff kontrolliert, insbesondere, anhand einer Skala abgelesen werden. Hierdurch lässt sich eine gewünschte Dosierung bequem einstellen bzw. kontrollieren.

Nach einem weiteren Aspekt des vorliegenden Verfahrens wird vor bzw. bei erneutem Befüllen des Schmierstoffaufnahmeraumes ein mit Druckfluid gefüllter Druckbeaufschlagungsraum insbesondere durch Rückführung des Druckfluids an das Fahrzeug bzw. an die Bau-, Land- oder Industriemaschine geleert bzw. verkleinert. Diese Rückführung des Druckfluids kann beispielsweise gleichzeitig mit Befüllung des Schmierstoffaufnahmeraums durch den vom Schmierstoff auf einen Kolben ausgeübten Druck erfolgen. Der hierbei aufzuwendende Druck bzw. Kraftaufwand ist so gering, dass mit einer manuell betätigbaren Schmierstoffpumpe der Schmierstoffaufnahmeraum befüllt werden kann. Dies wird nach einem besonders vorteilhaften Aspekt der vorliegenden Erfindung weiterhin dadurch erreicht, dass eine Rückführung des Druckfluids vorteilhafterweise in einem Zeitraum vorgenommen wird, in dem in eine Beaufschlagung parallel angeschlossene Arbeitseinrichtungen mit Druckfluid nicht erfolgt und der Druck unter einem Rückführungsdruck Pᵣ abgefallen ist. Bestimmte Teilsektionen einer Druckfluidanlage eines Fahrzeuges, einer Bau-, Land- oder Industriemaschine werden im normalen Betrieb von Zeit zu Zeit immer wieder drucklos gestellt und zwar meist dann, wenn die angeschlossene Arbeitseinrichtung bzw. angeschlossenen Arbeitseinrichtungen nicht in Betrieb sind. In diesen Zeiträumen ist eine besonders einfache Befüllung des Schmierstoffaufnahmeraumes möglich.

In einer weiteren bevorzugten Ausgestaltung des erfindungsgemäßen Verfahrens wird das zum Einpressen des Schmierstoff genutzte Druckfluid mittels einer - vorzugsweise einstellbaren - Dosiereinrichtung vordosiert zugeführt. Jedoch lässt sich eine gezielte Dosierung des zugeführten Schmierstoffs vornehmen, ohne dass die Dosierung direkt schmierstoffseitig, beispielsweise durch ein schmierstoffseitig vorgesehenes Dosierventil vorgenommen zu werden braucht.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:
- Fig. 1: eine Prinzipskizze einer ersten Ausführungsform der erfindungsgemäßen Einrichtung;
- Fig. 2: eine Seitenansicht einer konkreten Ausführungsform der erfindungsgemäßen Einrichtung;
- Fig. 3: eine Schnittansicht der Einrichtung nach Fig. 2 entlang der Linie B-B;
- Fig. 4: eine perspektivische Ansicht der in Fig. 2 dargestellten Ausführungsform;
- Fig. 5: eine Teilansicht entlang der Linie A-A in Fig. 2.
- Fig. 6: eine Prinzipskizze einer zweiten Ausführungsform der erfindungsgemäßen Einrichtung, dargestellt in einem Fördermodus,
- Fig. 7: eine Prinzipskizze der Ausführungsform nach Fig. 6 in einem Befüllmodus,
- Fig. 8: eine Prinzipskizze einer Ausführungsform eines Dosierventils in einer ersten Position,
- Fig. 9: das Dosierventil nach Fig. 8 in einer zweiten Position,
- Fig. 10: das Dosierventil nach den Fig. 8 und 9 in einer dritten Position,
- Fig. 11 - 16: eine konkrete Ausgestaltung einer erfindungsgemäßen Einrichtung zur Zuführung von Schmierstoff gemäß der anhand der Fig. 6 und 7 erläuterten zweiten Ausführungsform in unterschiedlichen Ansichten und Schnittansichten.

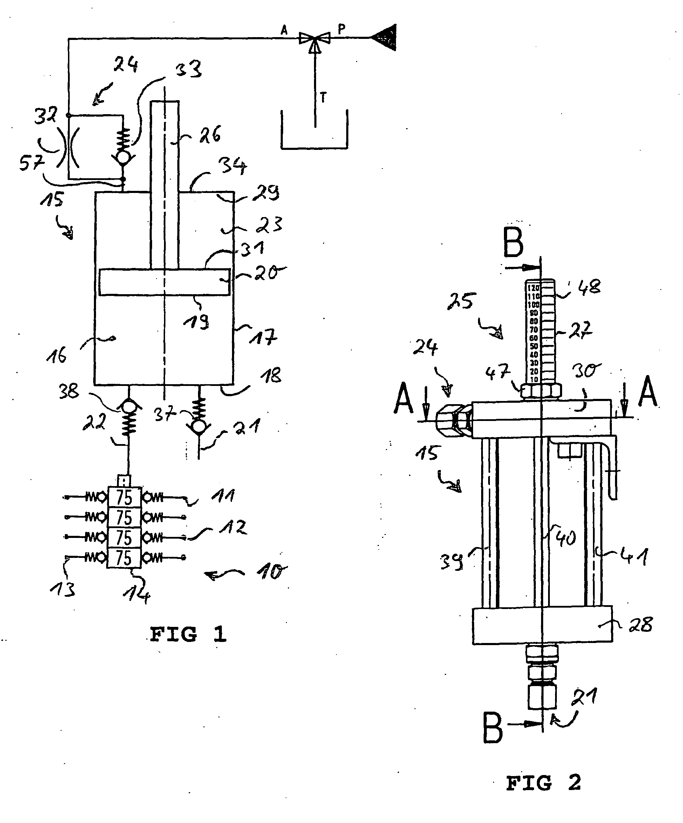

In Fig. 1 ist eine erste Ausführungsform einer erfindungsgemäßen Einrichtung zur Zuführung von Schmierstoff an ein in einem Fahrzeug, einer Bau-, Land- oder Industriemaschine eingebautes Schmierstoffzuführungssystem in einer Prinzipansicht dargestellt. Die Einrichtung umfasst ein Dosierbehältnis 15 mit einer zylindrisch umlaufenden Innenwandung 17, einer stirnseitigen Innenwandung 18 sowie einer stirnseitigen Wandung 29.

Innerhalb des Dosierbehältnisses 15 ist ein Kolben 20 verschieblich gelagert. Der Kolben 20 unterteilt den Innenraum des Dosierbehältnisses 15 in einen Schmierstoffaufnahmeraum 16 sowie einen Druckbeaufschlagungsraum 23. Der Kolben 20 weist eine den Schmierstoffaufnahmeraum 16 begrenzende Vorderseite 19 sowie eine dem Druckbeaufschlagungsraum 23 zugewandte Rückseite 31 auf. An der Rückseite 31 des Kolbens ist eine Stange 26 angeschlossen, die durch eine Führung 35 in der stirnseitigen Wandung 29 geführt ist.

Der Schmierstoffaufnahmeraum 16 kann über einen Schmierstoffeinlass 21 35 mit Schmierstoff befüllt werden. Der Schmierstoffeinlass 21 umfasst weiterhin ein einlassseitiges Rückschlagventil 37, das eine Rückströmung von Schmierstoff aus dem Schmierstoffaufnahmeraum 16 zurück in den Schmierstoffeinlass 21 verhindert.

Weiterhin ist am Schmierstoffaufnahmeraum 16 auch ein Schmierstoffauslass 22 vorgesehen, wobei auch hier gleichzeitig ein auslassseitiges Rückschlagventil 38 angeschlossen ist, um eine Rückströmung von in den Schmierstoffauslass 22 gepressten Schmierstoff in den Schmierstoffaufnahmeraum 16 zu verhindern.

Am Schmierstoffauslass 22 kann beispielsweise ein Progressivverteiler 14 angeschlossen sein, der Schmierstoff an mehrere Schmierstellen 11, 12, 13 fördert.

Zur Beaufschlagung des Druckbeaufschlagungsraumes 23 mit Druckfluid 15 weist dieser einen Druckfluidanschluss 24 auf, der hier konkret parallel zueinander angeschlossen eine Drosseleinrichtung 32 sowie ein erstes Rückschlagventil 33 aufweist. Die Drosseleinrichtung 32 ist dafür vorgesehen, den Fluss eines in den Druckbeaufschlagungsraum 23 einströmenden Druckfluids zu drosseln. Das Rückschlagventil 33 ermöglicht eine Rückführung des Druckfluids entgegen der Einströmeinrichtung unter Umgehung der Drosseleinrichtung 32. Der Druckfluidanschluss 24 steht bei der hier dargestellten Ausführungsform über eine einzige Druckfluideinström-/ausströmöffnung 57 mit dem Druckbeaufschlagungsraum 23 in Verbindung, über die in den Druckbeaufschlagungsraum 23 je nach Betriebsmodus entweder Druckfluid einströmen oder ausströmen kann.

In Fig. 2 ist das Dosierbehältnis 15 nach der Erfindung in einer Seitenansicht dargestellt. Die stirnseitige Wandung 18 und die gegenüberliegende stirnseitige Wandung 29 sind hier jeweils als zylindrische Basisplatte 28, 30 ausgebildet. Zwischen der zylindrischen Basisplatte 28 und der zylindrischen Basisplatte 30 ist eine die Innenwandung 17 ausbildende umlaufende, seitliche Behältniswand eingespannt. Die Einspannung erfolgt über vier sich durch die zylindrische Basisplatte 30 erstreckende Bolzen 39, 40, 41, 42, die mit einem Gewindeabschnitt 43 jeweils in ein entsprechend ausgebildetes Innengewinde in der zylindrischen Basisplatte 30 eingreifen. An den zylindrischen Basisplatten 28, 30 sind jeweils umlaufende Dichtmittel 44, 45 vorgesehen, die eine Abdichtung zwischen Behältniswand und Basisplatten 28, 30 bewirken.

Der Kolben 20 ist mit der bereits erwählten Stange 26 in einer Bohrung 46, die gleichzeitig eine Führung 35 für die Stange 26 definiert, geführt. Die Bohrung 46 weist zu einer Außenfläche 34 der zylindrischen Basisplatte 28 hin eine Erweiterung auf, in die Abdichtmittel 36 zur Abdichtung des Druckbeaufschlagungsraumes 23 nach außen hin aufgenommen sind. Weiterhin ist in die Bohrung 46 bzw. die Erweiterung mittels eines Sockels 47 ein transparentes Gehäuse 27 als Teil einer Zumesseinrichtung 25 eingeschraubt, derart, dass die über der Bohrung 46 überstehende Stange 26 im transparenten Gehäuse 27 aufgenommen ist. Das transparente Gehäuse 27 kann weiterhin mit einer Skaleneinteilung 48 versehen sein, um einen aktuellen Kolbenhub anhand der Position des Endes der Stange 26 innerhalb des transparenten Gehäuses 27 anhand der Skaleneinteilung 48 ablesen zu können.

In der zylindrischen Basisplatte ist weiterhin noch der bereits erwähnte Druckfluidanschluss 24 integriert, umfassend die bereits erwähnte Drosseleinrichtung 32 sowie das parallel hierzu angeordnete erste Rückschlagventil 20 33. Die Drosseleinrichtung 32 umfasst hier konkret eine Drosselschraube, die in einem Gewindekanal 50 verstellbar angeordnet ist, derart, dass das Druckfluid um eine einstellbare Gewindelänge im Gewindekanal 50 geführt ist, wobei es von einem seitlichen Kanal 49 auf den Gewindekanal 50 zugeführt wird.

Der gegenüberliegenden zylindrisch Basisplatte 28 sind jeweils Schmierstoffeinlass 21 mit einlassseitigem Rückschlagventil 37 sowie Schmierstoffauslass 22 mit auslassseitigem Rückschlagventil 38 integriert.

An einem der Basisplatten 28, 30, hier konkret an der druckfluidseitigen Basisplatte 28 kann noch ein Befestigungsbeschlag 51 mittels zweiter Befestigungsschrauben 52, 53 befestigt sein, um das Dosierbehältnis 15 an einem Fahr-, Bau-, Land- oder Industriemaschine zu befestigen.

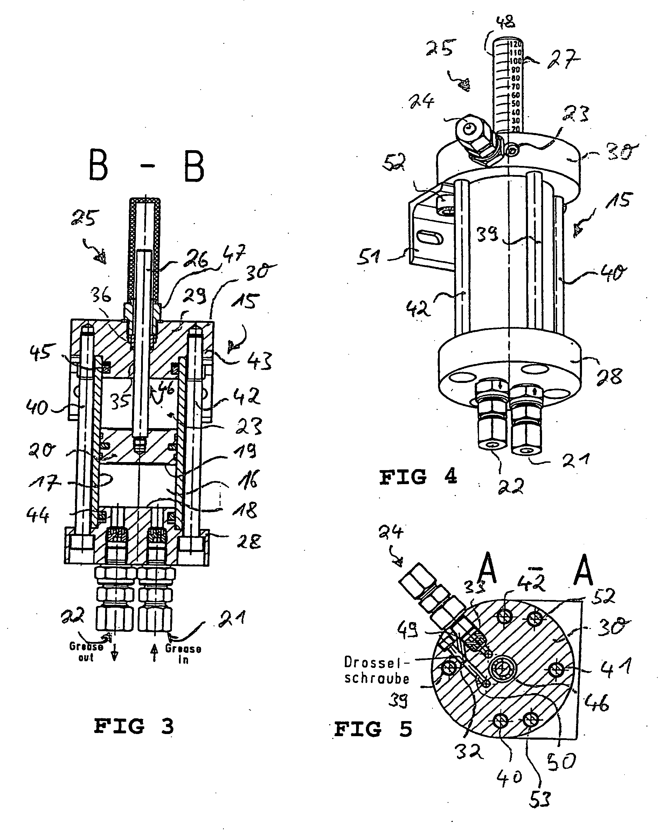

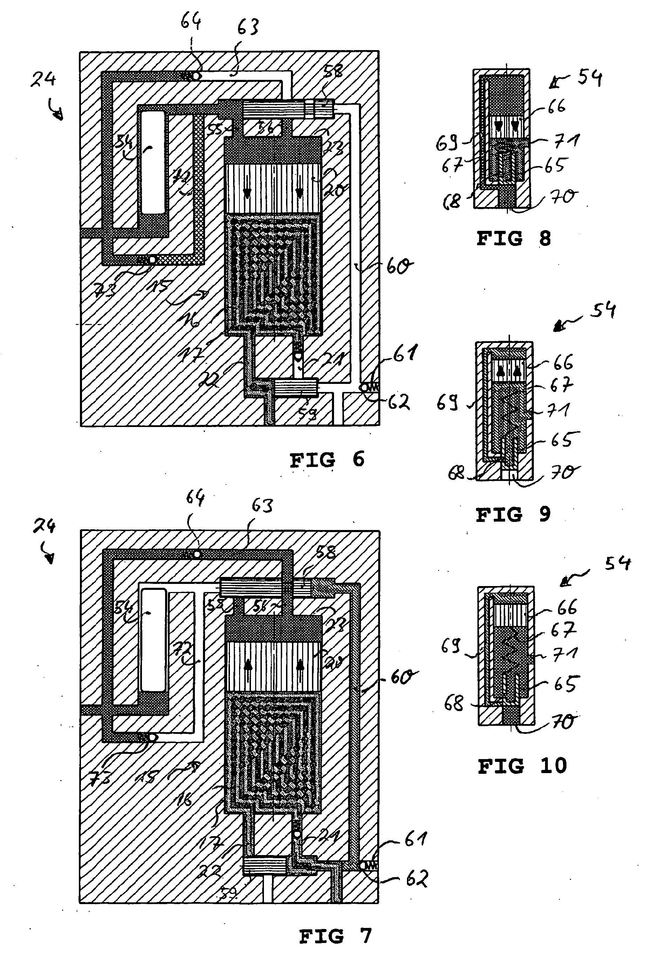

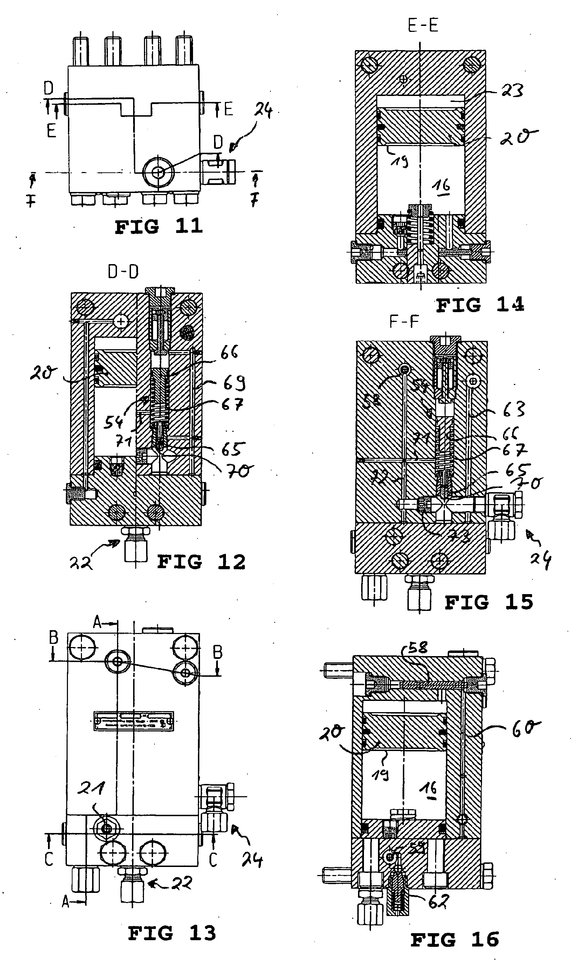

In Fig. 6 und 7 ist eine Prinzipskizze einer zweiten Ausführungsform der erfindungsgemäßen Einrichtung veranschaulicht, wobei Fig. 6 die Anordnung in einem Fördermodus und Fig. 7 die Anordnung in einem Befüllmodus zeigt. In den Fig. 11 bis 16 ist eine konkrete Ausgestaltung dieser zweiten Ausführungsform veranschaulicht. Die Ausführungsform nach den Fig. 6 und 7 bzw. 11 bis 16 unterscheidet sich von den anhand der Fig. 1 bis 5 dargelegten Ausführungsform vor allem dadurch, dass druckfluidseitig ein Dosierventil 54 vorgesehen ist, weiter zwischen Dosierventil 54 und Druckbeaufschlagungsraum 23 ein druckfluidseitiger Umsteuerkolben 58 längsverschieblich gelagert ist, schmierstoffseitig ebenfalls ein schmierstoffseitiger Umsteuerkolben 59 längsverschieblich zwischen dem Schmierstoffeinlass 21 und dem Schmierstoffauslass 22 gelagert ist, Wirkübertragungsmittel 60 zwischen Schmierstoffseite und Druckfluidseite zur Betätigung des druckfluidseitigen Umsteuerkolbens 58 vorgesehen sind und schließlich ein Druckbegrenzungsventil 62 in einem mit dem Einlass 21 in Verbindung stehenden Überlaufkanal 61 den maximal zulässigen Druck begrenzt.

Auch die Einrichtung gemäß dieser zweiten Ausführungsform umfasst ein Dosierbehältnis 15 mit einer zylindrisch umlaufenden Innenwandung 17, einer stirnseitigen Innenwandung 18 sowie einer stirnseitigen Wandung 29. Auch hier ist ein Kolben 20 verschieblich innerhalb des Dosierbehältnisses 15 gelagert, der den Innenraum in einen Schmierstoffaufnahmeraum 16 sowie einen Druckbeaufschlagungsraum 23 unterteilt. Eine Stange 26 muss bei dieser Ausführungsform hingegen nicht unbedingt vorgesehen werden und ist in der konkreten Ausgestaltung nach den Fig. 11 bis 16 auch nicht vorhanden.

Der Schmierstoffaufnahmeraum 16 kann über einen Schmierstoffeinlass 21, der auch hier mit einem einlassseitigen Rückschlagventil 37 versehen ist, mit Schmierstoff befüllt werden (vgl. Fig. 7). Weiterhin ist am Schmierstoffaufnahmeraum auch ein Schmierstoffauslass 22 vorgesehen, wobei dieser durch den bereits erwähnten schmierstoffseitigen Umsteuerkolben 59 versperrt (vgl. Fig. 7) bzw. unter Versperrung des Schmierstoffeinlasses 21 (vgl. Fig. 6) freigegeben werden kann.

Der Schmierstoffeinlass 21 steht mit einem Druckübertragungskanal 60 in Fluidverbindung, der als Wirkübertragungsmittel dient, um den bereits erwähnten druckfluidseitigen Umsteuerkolben 58 in eine Befüllposition zu drücken bzw. in einer Befüllposition zu halten (Fig. 7). In dieser Befüllposition kann Druckfluid aus dem Druckbeaufschlagungsraum 23 über eine Druckfluidausströmöffnung 56 und eine Druckfluidrückleitung 63 aus dem Druckbeaufschlagungsraum 23 geführt werden, wenn der Druck im Druckfluidsystem der Bau-, Land- oder Industriemaschine unter einem ausreichenden Wert abgefallen ist.

Ist der Befüllvorgang abgeschlossen und erfolgt daraufhin ein Druckfluidanstieg im Fluidsystem der Bau-, Land- oder Industriemaschine, so ist ein Zuströmen von Druckfluid über die Druckfluidleitung 63 durch ein Rückschlagventils 64 blockiert. Das Druckfluid kann nun aber über ein Dosierventil 54 in Richtung auf den Druckbeaufschlagungsraum 23 strömen. Es durchströmt das Dosierventil 54, dessen Funktionsweise anhand der Fig. 8 bis 10 veranschaulicht ist und in an sich bekannter Weise mit jedem Druckbeaufschlagungszyklus eine genau vorbestimmte Menge an Druckfluid weiterleitet.

Das anhand der Fig. 8 bis 10 veranschaulichte Dosierventil umfasst zwei längsverschieblich gelagerte Kolben 65, 66. Die Kolben 65, 66 sind über Federmittel 67 miteinander verbunden. Der zuflussseitige Kolben 65 weist einen kolbenseitigen Umschichtkanal 68 auf, der mit einem stationären Umschichtkanal 69 in Fluidverbindung bzw. außer Fluidverbindung gebracht werden kann. Die Arbeitsweise des Dosierventils 54 wird nun anhand der Fig. 8 bis 10 kurz erläutert. In Fig. 8 ist der Schritt Füllen und Ausstoßen veranschaulicht. An einem Einlass 70 wird Druckfluid zugeführt, das am erstem Kolben 65 vorbei über den stationären Umschichtkanal 69 auf eine Rückseite des zweiten Kolbens 66 gelangt und den zweiten Kolben unter Komprimierung der Federmittel 67 in Richtung auf den ersten Kolben 65 drückt. Hierdurch wird gleichzeitig auf der Vorderseite des zweiten Kolbens befindliches Druckfluid über einen Auslass 71 ausgestoßen. Fällt nun der Druck am Einlass 70 ab, bewegt sich der erste Kolben 65 entgegen der ursprünglichen Einströmrichtung. Gleichzeitig können sich die Federmittel 67 expandieren und auch den zweiten Kolben 66 in eine Ausgangslage zurückversetzen, so dass über den stationären Umschichtkanal 69 sowie den kolbenseitigen Umschichtkanal 68 Druckfluid von der Rückseite des zweiten Kolbens 66 in den nun vergrößerten Raum an seiner Vorderseite geführt wird. Hierbei erfolgt praktisch kein Ausstoß von Druckfluid über den Auslass 71. Erst wenn erneut der Druck des Druckfluids am Einlass 70 ansteigt, wird der erste Kolben 65 in Einströmrichtung bewegt, Druckfluid strömt erneut am ersten Kolben 65 vorbei über den stationären Umschichtkanal 69 auf die Rückseite des zweiten Kolbens 66, so dass ein erneuter Ausstoß von Druckfluid über den Auslass 71 erfolgt.

In dem in Fig. 6 dargestellten Fördermodus hat eine entsprechend vordosierte Menge an Druckfluid das Dosierventil 54 passiert und dadurch gleichzeitig den druckfluidseitigen Umsteuerkolben 58 aus der Befüllposition verschoben, so dass eine Druckfluideinströmöffnung 55 in den Druckbeaufschlagungsraum 23 freigegeben und gleichzeitig eine räumlich davon getrennte Druckfluidausströmöffnung 56 blockiert ist. Die vordosierte Menge Druckfluid strömt in den Druckbeaufschlagungsraum 23 ein und verschiebt den Kolben 20 entsprechend dem eingeleiteten Volumen, so dass der Schmierstoffaufnahmeraum 16 verkleinert und Schmierstoff aus dem Schmierstoffauslass 22 ausgegeben wird. Mit Ausgabe von Schmierstoff aus dem Schmierstoffauslass 22 verschiebt sich der schmierstoffseitige Umsteuerkolben 59, so dass der Schmierstoffeinlass 21 gesperrt, der Schmierstoffauslass 22 jedoch freigegeben wird (vgl. Fig. 6).

Wie aus den Fig. 6 und 7 erkennbar, ist - das Dosierventil 54 überbrückend ― noch eine Entlastungsleitung 72 vorgesehen, die in ähnlicher Weise wie die Druckfluidrückleitung 63 mit einem Rückschlagventil 73 versehen ist. Das Rückschlagventil 73 verhindert ein Einströmen von Druckfluid und eine Umgehung des Dosierventils 54 im Fördermodus. Bei Übergang in den Befüllmodus und entsprechend abgefallenen Druck des Druckfluids wird über die Entlastungsleitung 72 die Verschiebung des druckfluidseitigen Umsteuerkolbens 58 in die Befüllposition ermöglicht.

Anhand der Fig. 11 bis 16 ist eine mögliche konkrete Ausgestaltung der anhand der Fig. 6 und 7 prinzipiell veranschaulichten zweiten Ausführungsform in der erfindungsgemäßen Einrichtung dargestellt, wobei einander entsprechende Teile jeweils mit den gleichen Bezugsziffern versehen sind.

### Bezugszeichenliste

- 11-13: Schmierstellen
- 14: Progressivverteiler
- 15: Dosierbehältnis
- 16: Schmierstoffaufnahmeraum
- 17: Innenwandung, seitliche Wandung
- 18: Innenwandung, stirnseitige Wandung
- 19: Vorderseite (Kolben)
- 20: Kolben
- 21: Schmierstoffeinlass
- 22: Schmierstoffauslass
- 23: Druckbeaufschlagungsraum
- 24: Druckfluidanschluss
- 25: Zumesseinrichtung
- 26: Stange
- 27: (transparentes) Gehäuse
- 28: Zylindrische Basisplatte
- 29: stirnseitige Wandung
- 30: Zylindrische Basisplatte
- 31: Rückseite (Kolben)
- 32: Drosseleinrichtung
- 33: erstes Rückschlagventil
- 34: Außenfläche (stirnseitige Wandung)
- 35: Führung
- 36: Abdichtung
- 37: einlassseitiges Rückschlagventil
- 38: auslassseitiges Rückschlagventil
- 39-42: Bolzen
- 43: Gewindeabschnitt
- 44, 45: Dichtmittel
- 46: Bohrung
- 47: Sockel
- 48: Skaleneinteilung
- 49: seitlicher Kanal
- 50: Gewindekanal
- 51: Befestigungsbeschlag
- 52, 53: Befestigungsschrauben
- 54: Dosiereinrichtung, Dosierventil
- 55: Druckfluideinströmöffnung
- 56: Druckfluidausströmöffnung
- 57: Druckfluideinström-/ausströmöffnung
- 58: Umsteuerkolben (druckfluidseitig)
- 59: Umsteuerkolben (schmierstoffseitig)
- 60: Wirkübertragungsmittel, Druckübertragungskanal
- 61: Überlaufkanal
- 62: Druckbegrenzungsventil
- 63: Druckfluidrückleitung
- 64: Rückschlagventil
- 65, 66: Kolben (Dosierventil)
- 67: Federmittel
- 68: kolbenseitiger Umschichtkanal
- 69: stationärer Umschichtkanal
- 70: Einlass (Dosierventil)
- 71: Auslass (Dosierventil)
- 72: Entlastungsleitung
- 73: Rückschlagventil

- Pᵣ: Rückführungsdruck
- P_{G}: Grenzdruck

## Patentansprüche

1. Einrichtung zur Zuführung von Schmierstoff an ein in einem Fahrzeug, einer Bau-, Land- oder Industriemaschine eingebautes Schmierstoffzuführungssystem , das eine oder eine Mehrzahl von Schmierstellen (11, 12, 13) ggf. unter Zwischenschaltung eines oder mehrerer Progressivverteiler mit Schmierstoff versorgt,
umfassend ein Dosierbehältnis (15), in dem ein Schmierstoffaufnahmeraum (16) ausgebildet ist, wobei der Schmierstoffaufnahmeraum (16) durch Innenwandungen (17, 18) des Dosierbehältnisses und eine Vorderseite (19) eines verschieblich gelagerten Kolbens (20) begrenzt ist, wobei der Schmierstoffaufnahmeraum (16) weiterhin einen Schmierstoffeinlass (21) zur Aufnahme einer vorbestimmten Menge an Schmierstoff und einen Schmierstoffauslass (22) zur Abgabe von Schmierstoff an das Schmierstoffzuführungssystem (10) aufweist, wobei das Dosierbehältnis (15) einen Druckbeaufschlagungsraum (23) an der dem Schmierstoffaufnahmeraum (16) abgewandten Seite des Kolbens aufweist und wobei der Druckbeaufschlagungsraum (23) über einen Druckfluidanschluss (24) mit vom Fahrzeug, von der Bau-, Land- oder Industriemaschine bereitgestelltem Druckfluid (hydraulisch oder pneumatisch) beaufschlagbar ist,
**dadurch gekennzeichnet,**
**dass** der Druckfluidanschluss (24) einen druckfluidseitigen Umsteuerkolben (58) umfasst, um alternativ ein Zuströmen von Druckfluid über die Druckfluideinströmöffnung (55) in den Druckbeaufschlagungsraum (24) zuzulassen und gleichzeitig ein Abströmen durch die Druckfluidausströmöffnung (56) zu sperren bzw. ein Ausströmen von Druckfluid über die Druckfluidausströmöffnung (56) aus dem Druckbeaufschlagungsraum (24) zuzulassen und gleichzeitig ein Zuströmen durch die Druckfluideinströmöffnung (55) zu sperren.

2. Einrichtung zur Zuführung von Schmierstoff an ein in einem Fahrzeug, einer Bau-, Land- oder Industriemaschine eingebautes Schmierstoffzuführungssystem, das eine oder eine Mehrzahl von Schmierstellen (11, 12, 13) ggf. unter Zwischenschaltung eines oder mehrerer Progressivverteiler mit Schmierstoff versorgt,
umfassend ein Dosierbehältnis (15), in dem ein Schmierstoffaufnahmeraum (16) ausgebildet ist, wobei der Schmierstoffaufnahmeraum (16) durch Innenwandungen (17, 18) des Dosierbehältnisses und eine Vorderseite (19) eines verschieblich gelagerten Kolbens (20) begrenzt ist, wobei der Schmierstoffaufnahmeraum (16) weiterhin einen Schmierstoffeinlass (21) zur Aufnahme einer vorbestimmten Menge an Schmierstoff und einen Schmierstoffauslass (22) zur Abgabe von Schmierstoff an das Schmierstoffzuführungssystem (10) aufweist, wobei das Dosierbehältnis (15) einen Druckbeaufschlagungsraum (23) an der dem Schmierstoffaufnahmeraum (16) abgewandten Seite des Kolbens aufweist und wobei der Druckbeaufschlagungsraum (23) über einen Druckfluidanschluss (24) mit vom Fahrzeug, von der Bau-, Land- oder Industriemaschine bereitgestelltem Druckfluid (hydraulisch oder pneumatisch) beaufschlagbar ist.
**dadurch gekennzeichnet,**
**dass** zwischen Schmierstoffeinlass (21) und Schmierstoffauslass (22) ein schmierstoffseitiger Umsteuerkolben (59) wirksam ist, der alternativ einen Schmierstofffluss im Schmierstoffeinlass (21) bzw. im Schmier-stoffauslass (22) sperrt.

3. Einrichtung nach Anspruch 1 oder 2,
**dadurch gekennzeichnet,**
**dass** der Druckfluidanschluss (24) eine in den Druckbeaufschlagungsraum (23) mündende Druckfluideinströmöffnung (55) sowie eine hiervon räumlich getrennte vom Druckbeaufschlagungsraum (23) abgehende Druckfluidausstromöffnung (56) umfasst.

4. Einrichtung nach Anspruch 1 oder 2,
**dadurch gekennzeichnet,**
**dass** der Druckfluidanschluss (24) in Form einer einzigen Druckfluideinström/-ausströmöffnung (57) in den Druckbeaufschlagungsraum (23) mündet bzw. von ihm abgeht derart, dass die Druckfluideinström-/-ausströmöffnung (57) sowohl in für in dem Druckbeaufschlagungsraum (23) einströmendes Druckfluid als auch für aus ihm ausströmendes Druckfluid vorgesehen ist.

5. Einrichtung nach einem der Ansprüche 1 bis 4,
**dadurch gekennzeichnet,**
**dass** der Druckfluidanschluss (24) eine vorzugsweise einstellbare Dosiereinrichtung (54), insbesondere ein vorzugsweise einstellbares Dosierventil umfasst, um die Menge des in den Druckbeaufschlagungsraum (23) geleiteten Druckfluids auf einen vorbestimmten Wert zu begrenzen.

6. Einrichtung nach einem der vorhergehenden Ansprüche,
**dadurch gekennzeichnet,**
**dass** Wirkübertragungsmittel (60) vorgesehen sind, die bei Beaufschlagung des Schmierstoffeinlasses (21) mit Schmierstoff unter einem vorbestimmten Fülldruck den druckfluidseitigen Umsteuerkolben (58) in eine Befüllposition verschieben bzw. in einer Befüllposition halten.

7. Einrichtung nach Anspruch 6,
**dadurch gekennzeichnet,**
**dass** die Wirkübertragungsmittel durch einen vom Schmierstoffeinlass (21) abzweigenden Druckübertragungskanal (60) gebildet sind.

8. Einrichtung nach einem der Ansprüche 1 bis 7,
**dadurch gekennzeichnet,**
**dass** am Schmierstoffeinlass (21), insbesondere in einem abzweigenden Überlaufkanal (61), ein Druckbegrenzungsventil (62) angeordnet ist, um ab einem vorbestimmten Grenzdruck P_{G} Schmierstoff über den Überlaufkanal (61) abzuführen.

9. Einrichtung nach Anspruch 1 bis 8,
**dadurch gekennzeichnet,**
**dass** eine Zumesseinrichtung (25) am Dosierbehältnis (15) vorgesehen ist, die eine Einstellung bzw. Kontrolle des Verschiebeweges des Kolbens (20) ermöglicht, derart, dass pro Kolbenhub eine einstellbare bzw. kontrollierbare Menge an Schmierstoff dem Schmierstoffzuführungssystem zugeführt wird.

10. Einrichtung nach einem der Ansprüche 1 bis 9,
**dadurch gekennzeichnet,**
**dass** die Zumesseinrichtung (25) eine mit dem Kolben (20) verbundene Stange (26) umfasst.

11. Einrichtung nach Anspruch 10,
**dadurch gekennzeichnet,**
**dass** die Stange (26) in einer Führung (35) innerhalb der stirnseitigen Wandung (29) verschieblich gelagert ist.

12. Einrichtung nach Anspruch 11,
**dadurch gekennzeichnet,**
**dass** im Bereich der Führung (35) zur Abdichtung gegen den Druck des Druckfluids Abdichtmittel (36) vorgesehen sind.

13. Einrichtung nach einem der Ansprüche 10 bis 12,
**dadurch gekennzeichnet,**
**dass** das dem Kolben (20) abgewandte Ende der Stange (26) in einem transparentem Gehäuse (27) geführt ist, das an der stirnseitigen Wandung (29) des Dosierbehältnises (14) befestigt ist.

14. Einrichtung nach einem der Ansprüche 10 bis 13,
**dadurch gekennzeichnet,**
**dass** die Stange (26) an ihrem dem Kolben (20) abgewandten Ende durch einen Anschlag am Dosierbehältnis (15) geführt ist und ein Begrenzungsmittel umfasst, welchen an einer gewünschten Position der Stange (26) außerhalb des Anschlages festlegbar ist, derart, dass der Verschiebeweg des Kolbens (20) einstellbar begrenzt ist.

15. Einrichtung nach Anspruch 14,
**dadurch gekennzeichnet,**
**dass** der Anschlag durch einer Außenfläche (34) einer stirnseitige Wandung (29) des Dosierbehältnisses (15) gebildet wird.

16. Einrichtung nach Anspruch 14 oder 15,
**dadurch gekennzeichnet,**
**dass** die Stange (26) an ihrem dem Kolben (20) abgewandten Ende einen Außengewindeabschnitt aufweist und die Begrenzungsmittel eine auf dem Außengewindeabschnitt sitzende Einstellmutter umfassen.

17. Einrichtung nach einem der Ansprüche 1 bis 8,
**dadurch gekennzeichnet,**
**dass** der Druckfluidanschluss (24) eine vorzugsweise einstellbare Drosseleinrichtung (32) zur Reduzierung der Fließgeschwindigkeit des zur Beaufschlagung des Kolbens (20) genutzten und vom Fahrzeug, der Bau-, Land- oder Industriemaschine bereitgestellten Druckfluids umfasst.

18. Einrichtung nach einem der Ansprüche 1 bis 9,
**dadurch gekennzeichnet,**
**dass** der Druckfluidanschluss (24) ein erstes Rückschlagventil (33) umfasst, das eine Rückführung des Druckfluids und damit eine Reduzierung des Volumens des Druckbeaufschlagungsraumes (23) gestattet, wenn der vom Fahrzeug, der Bau-, Land- oder Industriemaschine am Druckfluidanschluss (24) entgegengesetzte Druck unter einem bestimmten Rückführungsdruck Pᵣ abgefallen ist.

19. Verfahren zur Zuführung von Schmierstoff an ein in ein Fahrzeug, einer Bau-, Land- oder Industriemaschine eingebautes Schmierstoffzuführungssystem , das eine oder eine Mehrzahl von Schmierstellen (11, 12, 13) ggf. unter Zwischenschaltung eines oder mehrerer Progressivverteiler mit Schmierstoff versorgt, umfassend die folgenden Schritte:
- Befüllen eines Schmierstoffaufnahmeraumes (16) eines Dosierbehäl nisses (15) mit einer vorbestimmten Menge an Schmierstoff.
- Einpressen der im Dosierbehältnis (15) aufgenommenen Menge an Schmierstoff in das Schmierstoffzuführungssystem,
wobei das Einpressen unter Einwirkung von Druckfluid aus einem an sich zum Antrieb von Arbeitseinrichtungen dienenden Druckfluidsystem einer Arbeitseinrichtung eines Fahrzeuges, einer Bau-, Land- oder Industriemaschine erfolgt,
**dadurch gekennzeichnet,**
**dass** bei Befüllen des Schmierstoffaufnahmeraums (16) ein Schmierstofffluss aus dem Schmierstoffaufnahmeraum (16) hinaus, insbesondere mittels eines Absperrventils oder mittels eines Schmierstoffseitigen Umsteuerkolbens (59), abgesperrt wird.

20. Verfahren zur Zuführung von Schmierstoff an ein in ein Fahrzeug, einer Bau-, Land- oder Industriemaschine eingebautes Schmierstoffzuführungssystem , das eine oder eine Mehrzahl von Schmierstellen (11, 12, 13) ggf. unter Zwischenschaltung eines oder mehrerer Progressivverteiler mit Schmierstoff versorgt, umfassend die folgenden Schritte:
- Befüllen eines Schmierstoffaufnahmeraumes (16) eines Dosierbehältnisses (15) mit einer vorbestimmten Menge an Schmierstoff
- Einpressen der im Dosierbehältnis (15) aufgenommenen Menge an Schmierstoff in das Schmierstoffzuführungssystem,
wobei das Einpressen unter Einwirkung von Druckfluid aus einem an sich zum Antrieb von Arbeitseinrichtungen dienenden Druckfluidsystem einer Arbeitseinrichtung eines Fahrzeuges, einer Bau-, Land- oder Industriemaschine erfolgt,
**dadurch gekennzeichnet,**
**dass** der Schmierstoffauslass (22) während des Auffüllen des Schmierstoffaufnahmeraums (16) mit Schmierstoff, insbesondere mittels eines schmierstoffseitigen Umsteuerkolbens (59) abgesperrt wird.

21. Verfahren nach Anspruch 19 oder 20,
**dadurch gekennzeichnet,**
**dass** beim Befüllen des Schmierstoffaufnahmeraumes (16) dessen aktuelles Volumen, d.h. die bereits aufgenommene Menge an Schmierstoff kontrolliert, insbesondere anhand einer Skala abgelesen werden kann.

22. Verfahren nach einem der Ansprüche 19 bis 21,
**dadurch gekennzeichnet,**
**dass** vor bzw. bei erneutem Befüllen des Schmierstoffaufnahmeraumes (16) ein mit Druckfluid gefüllter Druckbeaufschlagungsraum (23), insbesondere durch Rückführung des Druckfluids an das Fahrzeug, an die Bau-, Land- oder Industriemaschine geleert bzw. verkleinert wird.

23. Verfahren nach einem der Ansprüche 19 bis 22,
**dadurch gekennzeichnet,**
**dass** eine Rückführung des Druckfluids in einem Zeitraum vorgenommen wird, in dem eine Beaufschlagung parallel angeschlossener Arbeitseinrichtungen mit Druckfluid nicht erfolgt und der Druck unter einen Rückführungsdruck Pᵣ abgefallen ist.

24. Verfahren nach einem der Ansprüche 19 bis 23,
**dadurch gekennzeichnet,**
**dass** die Rückführung des Druckfluids durch den beim manuellen Befüllen des Dosierbehältnisses (15) ausgeübten Druck bewirkt wird.

25. Verfahren nach Anspruch 19 bis 24,
**dadurch gekennzeichnet,**
**dass** der druckfluidseitige Umsteuerkolben (58) bei Beaufschlagung des Schmierstoffeinlasses (21) mit Schmierstoff unter einem vorbestimmten Fülldruck in eine Befüllposition verschoben wird bzw. in einer Befüllposition gehalten wird.

26. Verfahren nach einem der Ansprüche 19 bis 25,
**dadurch gekennzeichnet,**
**dass** das zum Einpressen des Schmierstoffs genutzte Druckfluid mittels einer - vorzugsweise einstellbaren - Dosiereinrichtung (54) vordosiert zugeführt wird.

## Claims

1. A device for supplying lubricant to a lubricant supply system installed in a vehicle or construction, agricultural or industrial machinery which supplies one or a plurality of lubricating points (11, 12, 13) with lubricant with interposition of one or more progressive distributors, as need be, comprising a dosing container (15) in which a lubricant receiving cavity (16) is formed, wherein the lubricant receiving cavity (16) is bounded by inner walls (17, 18) of the dosing container and a front surface (19) of a movable piston (20), wherein the lubricant receiving cavity (16) moreover has a lubricant inlet (21) to receive a preset amount of lubricant and a lubricant outlet (22) to deliver the lubricant to the lubricant supply system (10), wherein the dosing container (15) has a pressurizing chamber (23) at the piston side facing away from the lubricant receiving cavity (16), and wherein a pressurized fluid provided by the vehicle or construction, agricultural or industrial machinery (hydraulically or pneumatically) can act on the pressurizing chamber (23) via a pressurized-fluid connection (24),
**characterized in that**
the pressurized-fluid connection (24) comprises a reversing piston (58) on the pressurized fluid side for alternately allowing pressurized fluid to flow into the pressurizing chamber (24) via a pressurized-fluid inlet opening (55) and simultaneously prevent it from flowing out through a pressurized-fluid outlet opening (56), respectively allowing pressurized fluid to flow out of the pressurizing chamber (24) via the pressurized-fluid outlet opening (56) and simultaneously preventing it from flowing through the pressurized-fluid inlet opening (55).

2. A device for supplying lubricant to a lubricant supply system installed in a vehicle or construction, agricultural or industrial machinery which supplies one or a plurality of lubricating points (11, 12, 13) with lubricant with interposition of one or more progressive distributors, as need be, comprising a dosing container (15) in which a lubricant receiving cavity (16) is formed, wherein the lubricant receiving cavity (16) is bounded by inner walls (17, 18) of the dosing container and a front surface (19) of a movable piston (20), wherein the lubricant receiving cavity (16) moreover has a lubricant inlet (21) to receive a preset amount of lubricant and a lubricant outlet (22) to deliver the lubricant to the lubricant supply system (10), wherein the dosing container (15) has a pressurizing chamber (23) at the piston side facing away from the lubricant receiving cavity (16), and wherein a pressurized fluid provided by the vehicle or construction, agricultural or industrial machinery (hydraulically or pneumatically) can act on the pressurizing chamber (23) via a pressurized-fluid connection (24),
**characterized in that**
a reversing piston (59) is operative on the lubricant side between the lubricant inlet (21) and the lubricant outlet (22) which alternately blocks lubricant flow into the lubricant inlet (21) or lubricant outlet (22) respectively.

3. The device according to claim 1 or 2,
**characterized in that**
the pressurized-fluid connection (24) comprises a pressurized-fluid inlet opening (55) leading into the pressurizing chamber (23) as well as, spatially separated from same, a pressurized-fluid outlet opening (56) leading out of the pressurizing chamber (23).

4. The device according to claim 1 or 2,
**characterized in that**
the pressurized-fluid connection (24) leads into respectively out of the pressurizing chamber (23) in the form of a single pressurized-fluid inlet/outlet opening (57) such that the pressurized-fluid inlet/outlet opening (57) is intended both for pressurized fluid flowing into the pressurizing chamber (23) and pressurized fluid flowing out of same.

5. The device according to any one of claims 1 to 4,
**characterized in that**
the pressurized-fluid connection (24) comprises a preferably adjustable dosing means (54), e. g. a preferably adjustable metering valve, for restricting the amount of pressurized fluid introduced into the pressurizing chamber (23) to a predetermined value.

6. The device according to any one of the preceding claims,
**characterized in that**
effect-transmitting means (60) are provided which displace the reversing piston (58) on the pressurized fluid side to a filling position, respectively keep same in a filling position under a predetermined filling pressure, when lubricant is acting on the lubricant inlet (21).

7. The device according to claim 6,
**characterized in that**
the effect-transmitting means are formed by a pressure-transmitting conduit (60) branching off from the lubricant inlet (21).

8. The device according to any one of claims 1 to 7,
**characterized in that**
a pressure control valve (62) is arranged at the lubricant inlet (21), e. g. in a branching overflow conduit (61), to discharge lubricant via the overflow conduit (61) as of a predetermined pressure limit P_{G}.

9. The device according to any one of claims 1 to 8,
**characterized in that**
a metering device (25) is provided on the dosing container (15) which allows the displacement path of the piston (20) to be adjusted respectively controlled such that an adjustable respectively controllable amount of lubricant is supplied to the lubricant supply system per piston stroke.

10. The device according to any one of claims 1 to 9,
**characterized in that**
the metering device (25) comprises a rod (26) connected to the piston (20).

11. The device according to claim 10,
**characterized in that**
the rod (26) is displaceably mounted in a guide (35) within the front surface wall (29).

12. The device according to claim 11,
**characterized in that**
sealing means (36) are provided in the area of the guide (35) to seal against the pressure of the pressurized fluid.

13. The device according to any one of claims 10 to 12,
**characterized in that**
the end of the rod (26) facing away from the piston (20) is guided in a transparent housing (27) fixed to the front surface wall (29) of the dosing container (14).

14. The device according to any one of claims 10 to 13,
**characterized in that**
the rod (26), on its end facing away from the piston (20), is guided by a stopper on the dosing container (15) and comprises a limiting means fixable beyond the stopper at a desired position of the rod (26) such that the displacement path of the piston (10) can be adjustably restricted.

15. The device according to claim 14,
**characterized in that**
the stopper is formed by an outer surface (34) of a front surface wall (29) of the dosing container (15).

16. The device according to claim 14 or 15,
**characterized in that**
the rod (26) has an external thread portion at its end facing away from the piston (20) and the limiting means comprise an adjusting nut seated on the external thread portion.

17. The device according to any one of claims 1 to 8,
**characterized in that**
the pressurized-fluid connection (24) comprises a preferably adjustable throttling means (32) for reducing the flow speed of the pressurized fluid used to pressurize the piston (20) and provided by the vehicle or the construction, agricultural or industrial machinery.

18. The device according to any one of claims 1 to 9,
**characterized in that**
the pressurized-fluid connection (24) comprises a first check valve (33) which allows the pressurized fluid to be returned and hence the volume of the pressurizing chamber (23) to be reduced, when the pressure countered by the vehicle or the construction, agricultural or industrial machinery at the pressurized-fluid connection (24) has fallen below a defined return pressure Pᵣ.

19. A method for supplying lubricant to a lubricant supply system installed in a vehicle or construction, agricultural or industrial machinery which supplies one or a plurality of lubricating points (11, 12, 13) with lubricant with interposition of one or more progressive distributors, as need be, comprising the following steps:
- filling a lubricant receiving cavity (16) of a dosing container (15) with a predetermined amount of lubricant,
- pressure-injecting the amount of lubricant received in the dosing container (15) into the lubricant supply system,
wherein the pressure-injecting ensues from the action of pressurized fluid from a pressurized fluid system of an operating device of a vehicle or construction, agricultural or industrial machinery serving to drive operating devices,
**characterized in that**
during the filling of the lubricant receiving cavity (16), lubricant flow out of the lubricant receiving cavity (16) is blocked, e.g. by means of a shut-off valve or a reversing piston (59) on the lubricant side.

20. A method for supplying lubricant to a lubricant supply system installed in a vehicle or construction, agricultural or industrial machinery which supplies one or a plurality of lubricating points (11, 12, 13) with lubricant with interposition of one or more progressive distributors, as need be, comprising the following steps:
- filling a lubricant receiving cavity (16) of a dosing container (15) with a predetermined amount of lubricant,
- pressure-injecting the amount of lubricant received in the dosing container (15) into the lubricant supply system,
wherein the pressure-injecting ensues from the action of pressurized fluid from a pressurized fluid system of an operating device of a vehicle or construction, agricultural or industrial machinery serving to drive operating devices,
**characterized in that**
during the filling of the lubricant receiving cavity (16) with lubricant, the lubricant outlet (22) is sealed off, e. g. by means of a reversing piston (59) on the lubricant side.

21. The method according to claim 19 or 20,
**characterized in that**
during the filling of the lubricant receiving cavity (16), the current volume thereof, i.e. the amount of lubricant already admitted is checked, e. g. using a scale.

22. The method according to any one of claims 19 to 21,
**characterized in that**
prior to or during renewed filling of the lubricant receiving cavity (16), a pressurizing chamber (23) filled with pressurized fluid is emptied respectively reduced, e. g. by a return of the pressurized fluid to the vehicle or the construction, agricultural or industrial machinery.

23. The method according to any one of claims 19 to 22,
**characterized in that**
the return of the pressurized fluid occurs over a period of time in which there is no pressurized fluid applied to parallel-connected operating devices and the pressure has fallen below a return pressure Pᵣ.

24. The method according to any one of claims 19 to 23,
**characterized in that**
the return of the pressurized fluid is caused by the pressure exerted during the manual filling of the dosing container (15).

25. The method according to claims 19 to 24,
**characterized in that**
the reversing piston (58) on the pressurized fluid side is displaced into a filling position respectively kept in a filling position when lubricant is admitted into the lubricant inlet (21) under a predetermined filling pressure.

26. The method according to any one of claims 19 to 25,
**characterized in that**
the pressurized fluid utilized for pressure-injecting the lubricant is supplied pre-metered by a - preferably adjustable - dosing means (54).

## Revendications

1. Dispositif d'amenée de lubrifiant à un système d'amenée de lubrifiant intégré dans un véhicule, un engin de chantier, une machine agricole ou une machine industrielle, lequel alimente en lubrifiant un ou plusieurs points de lubrification (11, 12, 13) en passant éventuellement par un ou plusieurs distributeurs progressifs intercalés,
comprenant un récipient de dosage (15) dans lequel une chambre de réception de lubrifiant (16) est formée, la chambre de réception de lubrifiant (16) étant limitée par des parois intérieures (17, 18) du récipient de dosage et une face avant (19) d'un piston (20) logé de manière coulissante, la chambre de réception de lubrifiant (16) présentant en outre une entrée de lubrifiant (21) pour recevoir une quantité prédéterminée de lubrifiant et une sortie de lubrifiant (22) pour délivrer du lubrifiant au système d'amenée de lubrifiant (10), le récipient de dosage (15) présentant une chambre d'alimentation en pression (23) du côté du piston qui est opposé à la chambre de réception de lubrifiant (16) et la chambre d'alimentation en pression (23) pouvant être alimentée (hydrauliquement ou pneumatiquement) via un raccord de fluide de pression (24) en fluide de pression mis à disposition par le véhicule, l'engin de chantier, la machine agricole ou la machine industrielle,
**caractérisé en ce que**
le raccord de fluide de pression (24) comprend un piston de renvoi situé côté fluide de pression (58) pour alternativement autoriser une arrivée de fluide de pression dans la chambre d'alimentation en pression (24) via l'orifice d'entrée de fluide de pression (55) et arrêter en même temps un écoulement via l'orifice de sortie de fluide de pression (56) ou autoriser une sortie de fluide de pression hors de la chambre d'alimentation en pression (24) via l'orifice de sortie de fluide de pression (56) et arrêter en même temps une arrivée via l'orifice d'entrée de fluide de pression (55).

2. Dispositif d'amenée de lubrifiant à un système d'amenée de lubrifiant intégré dans un véhicule, un engin de chantier, une machine agricole ou une machine industrielle, lequel alimente en lubrifiant un ou plusieurs points de lubrification (11, 12, 13) en passant éventuellement par un ou plusieurs distributeurs progressifs intercalés,
comprenant un récipient de dosage (15) dans lequel une chambre de réception de lubrifiant (16) est formée, la chambre de réception de lubrifiant (16) étant limitée par des parois intérieures (17, 18) du récipient de dosage et une face avant (19) d'un piston (20) logé de manière coulissante, la chambre de réception de lubrifiant (16) présentant en outre une entrée de lubrifiant (21) pour recevoir une quantité prédéterminée de lubrifiant et une sortie de lubrifiant (22) pour délivrer du lubrifiant au système d'amenée de lubrifiant (10), le récipient de dosage (15) présentant une chambre d'alimentation en pression (23) du côté du piston qui est opposé à la chambre de réception de lubrifiant (16) et la chambre d'alimentation en pression (23) pouvant être alimentée (hydrauliquement ou pneumatiquement) via un raccord de fluide de pression (24) en fluide de pression mis à disposition par le véhicule, l'engin de chantier, la machine agricole ou la machine industrielle,
**caractérisé en ce que**
un piston de renvoi situé côté lubrifiant (59), qui arrête alternativement un flux de lubrifiant dans l'entrée de lubrifiant (21) ou dans la sortie de lubrifiant (22), est actif entre l'entrée de lubrifiant (21) et la sortie de lubrifiant (22).

3. Dispositif selon la revendication 1 ou 2,
**caractérisé en ce que**
le raccord de fluide de pression (24) comprend un orifice d'entrée de fluide de pression (55) débouchant dans la chambre d'alimentation en pression (23) ainsi qu'un orifice de sortie de fluide de pression (56) partant de la chambre d'alimentation en pression (23) et distinct spatialement de celui-ci.

4. Dispositif selon la revendication 1 ou 2,
**caractérisé en ce que**
le raccord de fluide de pression (24) débouche dans la chambre d'alimentation en pression (23) et part de celle-ci sous forme d'un seul orifice d'entrée/sortie de fluide de pression (57) de telle façon que l'orifice d'entrée/sortie de fluide de pression (57) soit prévu aussi bien pour du fluide de pression entrant dans la chambre d'alimentation en pression (23) que pour du fluide de pression sortant de celle-ci.

5. Dispositif selon l'une des revendications 1 à 4,
**caractérisé en ce que**
le raccord de fluide de pression (24) comprend un dispositif de dosage (54) de préférence réglable, en particulier une vanne de dosage de préférence réglable, pour limiter la quantité du fluide de pression conduit dans la chambre d'alimentation en pression (23) à une valeur prédéterminée.

6. Dispositif selon l'une des revendications précédentes,
**caractérisé en ce que**
des moyens de transmission active (60) sont prévus, qui font coulisser dans une position de remplissage ou maintiennent dans une position de remplissage le piston de renvoi côté fluide de pression (58) lors de l'alimentation de l'entrée de lubrifiant (21) en lubrifiant sous une pression de remplissage prédéterminée.

7. Dispositif selon la revendication 6,
**caractérisé en ce que**
les moyens de transmission active sont formés par un canal de transmission de pression (60) en dérivation de l'entrée de lubrifiant (21).

8. Dispositif selon l'une des revendications 1 à 7,
**caractérisé en ce que**
une vanne de limitation de pression (62) est disposée au niveau de l'entrée de lubrifiant (21), en particulier dans un canal de trop-plein (61) en dérivation, pour évacuer du lubrifiant via le canal de trop-plein (61) à partir d'une pression limite prédéterminée P_{G}.

9. Dispositif selon la revendication 1 à 8,
**caractérisé en ce que**
un dispositif régulateur (25) qui permet un réglage ou un contrôle de la course de coulissement du piston (20) de telle sorte qu'une quantité réglage ou contrôlable de lubrifiant par battement de piston soit amenée au système d'amenée de lubrifiant, est prévu au niveau du récipient de dosage (15).

10. Dispositif selon l'une des revendications 1 à 9,
**caractérisé en ce que**
le dispositif régulateur (25) comprend une tige (26) reliée au piston (20).

11. Dispositif selon la revendication 10,
**caractérisé en ce que**
la tige (26) est logée de manière coulissante dans un guidage (35) à l'intérieur de la paroi frontale (29).

12. Dispositif selon la revendication 11,
**caractérisé en ce que**
des moyens d'étanchéité (36) sont prévus dans la zone du guidage (35) pour assurer l'étanchéité par rapport à la pression du fluide de pression.

13. Dispositif selon l'une des revendications 10 à 12,
**caractérisé en ce que**
l'extrémité de la tige (26) qui est située du côté opposé au piston (20) est guidée dans un boîtier (27) transparent qui est fixé à la paroi frontale (29) du récipient de dosage (14).

14. Dispositif selon l'une des revendications 10 à 13,
**caractérisé en ce que**
la tige (26), à son extrémité située du côté opposé au piston (20), est guidée par une butée au niveau du récipient de dosage (15) et comprend un moyen de limitation qui peut être placé dans une position souhaitée de la tige (26) en dehors de la butée de telle sorte que la course de coulissement du piston (20) soit limitée de manière réglable.

15. Dispositif selon la revendication 14,
**caractérisé en ce que**
la butée est formée par une surface extérieure (34) d'une paroi frontale (29) du récipient de dosage (15).

16. Dispositif selon la revendication 14 ou 15,
**caractérisé en ce que**
la tige (26), à son extrémité située du côté opposé au piston (20), présente une section à filetage extérieur et les moyens de limitation comprennent un écrou de réglage portant sur la section à filetage extérieur.

17. Dispositif selon l'une des revendications 1 à 8,
**caractérisé en ce que**
le raccord de fluide de pression (24) comprend un dispositif d'étranglement (32) de préférence réglable pour réduire la vitesse d'écoulement du fluide de pression utilisé pour alimenter le piston (20) et mis à disposition par le véhicule, l'engin de chantier, la machine agricole ou la machine industrielle.

18. Dispositif selon l'une des revendications 1 à 9,
**caractérisé en ce que**
le raccord de fluide de pression (24) comprend une première vanne anti-retour (33) qui autorise un retour du fluide de pression et donc une réduction du volume de la chambre d'alimentation en pression (23) lorsque la pression opposée par le véhicule, l'engin de chantier, la machine agricole ou la machine industrielle au niveau du raccord de fluide de pression (24) est descendue sous une pression de retour déterminée Pᵣ.

19. Procédé d'amenée de lubrifiant à un système d'amenée de lubrifiant intégré dans un véhicule, un engin de chantier, une machine agricole ou une machine industrielle, lequel alimente en lubrifiant un ou plusieurs points de lubrification (11, 12, 13) en passant éventuellement par un ou plusieurs distributeurs progressifs intercalés, comprenant les étapes suivantes :
- remplissage d'une chambre de réception de lubrifiant (16) d'un récipient de dosage (15) avec une quantité prédéterminée de lubrifiant,
- injection dans le système d'amenée de lubrifiant de la quantité de lubrifiant reçue dans le récipient de dosage (15),
l'injection étant effectuée moyennant l'action d'un fluide de pression provenant d'un système de fluide de pression, servant en soi à entraîner des dispositifs de travail, d'un dispositif de travail d'un véhicule, d'un engin de chantier, d'une machine agricole ou d'une machine industrielle,
**caractérisé en ce que**
lors du remplissage de la chambre de réception de lubrifiant (16), un flux de lubrifiant sortant de la chambre de réception de lubrifiant (16) est arrêté, en particulier au moyen d'une vanne d'arrêt ou au moyen d'un piston de renvoi situé côté lubrifiant (59).

20. Procédé d'amenée de lubrifiant à un système d'amenée de lubrifiant intégré dans un véhicule, un engin de chantier, une machine agricole ou une machine industrielle, lequel alimente en lubrifiant un ou plusieurs points de lubrification (11, 12, 13) en passant éventuellement par un ou plusieurs distributeurs progressifs intercalés, comprenant les étapes suivantes :
- remplissage d'une chambre de réception de lubrifiant (16) d'un récipient de dosage (15) avec une quantité prédéterminée de lubrifiant,
- injection dans le système d'amenée de lubrifiant de la quantité de lubrifiant reçue dans le récipient de dosage (15),
l'injection étant effectuée moyennant l'action d'un fluide de pression provenant d'un système de fluide de pression, servant en soi à entraîner des dispositifs de travail, d'un dispositif de travail d'un véhicule, d'un engin de chantier, d'une machine agricole ou d'une machine industrielle,
**caractérisé en ce que**
la sortie de lubrifiant (22) est arrêtée pendant le remplissage de la chambre de réception de lubrifiant (16) avec du lubrifiant, en particulier au moyen d'un piston de renvoi situé côté lubrifiant (59).

21. Procédé selon la revendication 19 ou 20,
**caractérisé en ce que**
lors du remplissage de la chambre de réception de lubrifiant (16), son volume en cours, c'est-à-dire la quantité déjà reçue de lubrifiant, peut être relevé de manière contrôlée, en particulier à l'aide d'une graduation.

22. Procédé selon l'une des revendications 19 à 21,
**caractérisé en ce que**
avant ou lors d'un nouveau remplissage de la chambre de réception de lubrifiant (16), une chambre d'alimentation en pression (23) remplie de fluide de pression est vidée ou diminuée, en particulier par retour du fluide de pression au véhicule, à l'engin de chantier, la machine agricole ou la machine industrielle.

23. Procédé selon l'une des revendications 19 à 22,
**caractérisé en ce que**
un retour du fluide de pression est opéré dans une période pendant laquelle une alimentation en fluide de pression de dispositifs de travail raccordés en parallèle n'a pas lieu et la pression est descendue sous une pression de retour Pᵣ.

24. Procédé selon l'une des revendications 19 à 23,
**caractérisé en ce que**
le retour du fluide de pression est provoqué par la pression exercée lors du remplissage manuel du récipient de dosage (15).

25. Procédé selon les revendications 19 à 24,
**caractérisé en ce que**
le piston de renvoi côté fluide (58) coulisse dans une position de remplissage ou est maintenu dans une position de remplissage lors de l'alimentation de l'entrée de lubrifiant (21) en lubrifiant sous une pression de remplissage prédéterminée.

26. Procédé selon l'une des revendications 19 à 25,
**caractérisé en ce que**
le fluide de pression utilisé pour l'injection du lubrifiant est amené de manière pré-dosée au moyen d'un dispositif de dosage (54), de préférence réglable.
